**Europäisches Patentamt**

**European Patent Office**

**Office européen des brevets**

(11) Veröffentlichungsnummer: **0 180 249 B1**

(12)

# EUROPÄISCHE PATENTSCHRIFT

(45) Veröffentlichungstag der Patentschrift:
27.06.90

(51) Int. Cl.⁵: **C10J 3/48, C01B 3/36**

(21) Anmeldenummer: 85114007.9

(22) Anmeldetag: 04.11.85

(54) **Verfahren zum Betreiben eines Brenners.**

(30) Priorität: 02.11.84 DE 3440088

(43) Veröffentlichungstag der Anmeldung:
07.05.86 Patentblatt 86/19

(45) Bekanntmachung des Hinweises auf die Patenterteilung:
27.06.90 Patentblatt 90/26

(84) Benannte Vertragsstaaten:
AT BE DE FR GB IT NL SE

(56) Entgegenhaltungen:
EP-A- 0 021 461
EP-A- 0 026 509
EP-A- 0 098 043
EP-A- 0 120 517
DE-B- 1 152 783
US-A- 3 847 564

(73) Patentinhaber: VEBA OEL Technologie GmbH,
Alexander-von-Humboldt-Strasse,
D-4650 Gelsenkirchen 2(DE)

(72) Erfinder: Wenning, Hans-Peter, Hoonkesweg 11,
D-4270 Dorsten(DE)
Erfinder: Friedrich, Joachim, Schumannstrasse 1 A,
D-4350 Recklinghausen(DE)
Erfinder: Pontow, Bernd, Hafenstrasse 4,
D-4270 Dorsten(DE)

(74) Vertreter: Lindner, Wolfgang, Dr.,
Alexander-von-Humboldt-Strasse Postfach 20 10 45,
D-4650 Gelsenkirchen(DE)

## Beschreibung

Die Erfindung betrifft ein Verfahren zum Betreiben eines Brenners gemäß dem Oberbegriff von Patentanspruch 1.

Ein Brenner mit Zuleitungen für homogene oder heterogene Reaktanden und im Bereich des Brennerkopfes peripher angeordneter Brennerkühlkammer insbesondere zur Herstellung von Synthesegas ist bekannt (EP-OS 0 098 043).

Ferner ist eine Vorrichtung und ein Verfahren zur Verbrennung flüssiger Kohlenwasserstoffe in einem Synthesegaserzeuger gemäß dem Oberbegriff von Patentanspruch 1 bekannt (US-PS 3 847 564).

Zur besseren Ausnutzung von konventionellem Erdöl bei der Gewinnung leicht siedender Produkte bzw. bei der Erschließung komplementärer Rohstoffe wie Schwerstöl oder Kohle werden in zunehmendem Umfang Konversionsprozesse entwickelt und angewandt.

Eines der auftretenden Probleme ist die Entsorgung der anfallenden Konversionsrückstände, die mit abnehmender Einsatzproduktqualität und höher werdender Konversionsrate einen immer höher werdenden Gehalt an schädlichen Inhaltsstoffen wie Schwermetallen sowie Feststoffen aufweisen.

Die Feststoffanteile können durch Katalysatorzusätze, beispielsweise bei den Verfahren der spaltenden oder raffinierenden Hydrierung in die anfallenden Rückstände gelangt sein, wobei die Feststoffanteile während des Konversionsprozesses aufkonzentriert werden. Bei der Konversion von Kohle liegt der Feststoff zum Teil bereits im Ausgangsmaterial in Form des sogenannten Aschegehaltes vor. Beispielsweise bei der spaltenden Hydrierung von Kohle wird der Feststoff ebenfalls im Rückstand angereichert.

Die Rückstände der Hydrierung von kohlenstoffhaltigem Material sowie der Destillation von Erdölen, Bitumen u. dgl. aber auch bestimmter Mineralölfraktionen selbst oder Kohle können einem Konversionsprozeß durch partielle Verbrennung und Vergasung unterworfen werden.

Um einen optimalen Umsatz bei der Vergasung zu erzielen, muß der Einsatzstoff möglichst fein zerteilt in die Reaktionszone gelangen. Bei der Oxidation des Vergasungseinsatzes mit einem freien Sauerstoff enthaltenden Gas und den simultan ablaufenden heterogenen Umsetzungen mit gleichzeitig zugesetztem Wasserdampf und ggf. weiteren zugesetzten Komponenten, z. B. einem Moderatorgas ist die Größe der Kontaktoberfläche zwischen Gas- und Brennstoffphase mitentscheidend für den erreichbaren Umsatz bei der Vergasungsreaktion.

Bei den bekannten Vergasungsbrennern wird die für einen möglichst hohen Umsatz der Vergasungsreaktion notwendige feine Zerteilung des Einsatzstoffes durch eine enge Einschnürung des Brennstoffeintritts mit einem entsprechend hohen Druckverlust und einer hohen Geschwindigkeit in der Zerstäuberdüse erreicht. Bei der Zerstäubung von abrasiven Medien, wie den feststoffhaltigen Rückstandssuspensionen aus Konversionsprozessen, würde die für eine optimale Zerstäubung erforderliche hohe Düsengeschwindigkeit zu einem hohen Verschleiß und entsprechend kurzen Standzeiten des Brenners führen.

Die Zerstäubung von Feststoffsuspensionen über einen engen Düsenquerschnitt würde außerdem zu Verstopfungsneigung in der Düse, ungleichmäßiger Förderung und schwankender Produktgaszusammensetzung sowie -menge führen.

Die Vergasungsflamme weist in dem Vergasungsreaktor in der Nähe der Brennermündung ihre höchste Temperatur auf. Durch den direkt an der Brennermündung vorliegenden Sauerstoffüberschuß kann die exotherme, energieliefernde, partielle Oxidation des Brennstoffes nur dort stattfinden. Durch die hohe Flammtemperatur ergibt sich durch Strahlung eine starke Wärmebelastung der Brennermündung. Im Zusammenwirken zwischen der daraus resultierenden erhöhten Materialtemperatur und der sauerstoffhaltigen Atmosphäre in Brennernähe ergibt sich die Gefahr einer Hochtemperaturkorrosion bzw. im schlimmsten Falle - bei ungenügender Wärmeabfuhr - eines Wegbrennens der Brennerspitze. Durch die Erhöhung der Austrittsgeschwindigkeiten kann man die Temperaturbelastung verringern. Bei zu hohen Austrittsgeschwindigkeiten besteht jedoch verstärkt die Gefahr von Rückwirbelbildung und damit wieder der Zündung in Brennernähe.

Bei dem Einsatz aschehaltiger Brennstoffe liegt die Reaktortemperatur bei der Vergasung bzw. bei der Synthesegaserzeugung in der Nähe bzw. oberhalb der Schmelztemperatur der entstehenden Schlacke. Aus diesem Grunde besteht die Gefahr der langsamen Verschlackung der Brenneraustrittsöffnung, womit eine Veränderung der Flammform und eine Störung bzw. Beeinträchtigung des Vergasungsprozesses einhergehen können.

Der Erfindung liegt nun die Aufgabe zugrunde, die Verschlackung des Brenners und die Beschädigung der Brennerspitze bzw. der Brennermündung durch Überhitzung zu vermeiden. Insbesondere soll sichergestellt werden, daß eine Zündung der Brennstoffsuspension an der Brennermündung ausgeschlossen ist.

Diese Aufgabe wird erfindungsgemäß entsprechend den im Anspruch 1 angegebenen Merkmalen gelöst.

Hiernach ist die Brennerkühlkammer so ausgebildet, daß eine Zündung des Brennstoffes in Brennermündungsnähe nicht erfolgen kann und die Strahlungswärmebelastung des Brenners minimal ist. Durch eine Zusammenfassung der Zuführungen der Reaktanden in einer Baugruppe koaxialer Leitungen, die als Brennerlanze in eine entsprechende Aussparung der Brennerkühlkammer eingesetzt wird, ist eine schnelle Montage sowie Auswechslung möglich.

In weiterer Ausgestaltung des Brenners nach Anspruch 1 ist dieser Brenner gekennzeichnet durch einen an der Brennermündung mit kreisförmigem Querschnitt in die Brennervorkammer austretenden axial geführten Strom eines homogenen oder heterogenen Reaktanden oder Reaktandengemisches, einen Strom eines koaxial geführten und an der Brennermündung auf einem größeren mittleren Durchmesser als dem Durchmesser des axial geführten Stromes als Ringstrom in die Brennervorkammer austretenden Reaktanden oder Moderators, insbesondere eines Moderatorgases und einen weiteren Strom eines koaxial geführten und an der Brennermündung auf einem größeren mittleren Durchmesser als dem mittleren Durchmesser des erstgenannten koaxial geführten Ringstromes in die Brennervorkammer austretenden weiteren Reaktanden.

In einer vorteilhaften Ausführung ist die Brennerlanze aus einem Zentralrohr, das als mit einem zusätzlichen Mantelrohr umgebene Mantelleitung ausgebildet ist, und welches in einem Abstand und aufstromseitig von der Brennermündung endet sowie aus zwei koaxialen Rohren aufgebaut.

In weiterer Ausbildung des Brenners geht das Mantelrohr an der Brennermündung in eine axiale Düse mit einem kreisförmigen Düsenmund über.

Die kegelstumpfförmige (konische) Brennervorkammer liegt mit ihrer Grundfläche in der Ebene der Brennermündung und ist in der gegenüberliegenden Fläche auf eine Öffnung mit einem engeren Querschnitt durch die entsprechend hervorspringenden in Richtung der Brennerlängsachse geneigten Flanken der Brennerkühlkammer begrenzt.

Dabei bilden die geneigten seitlichen Flanken der Brennervorkammer mit ihrer gedachten Verlängerung auf die Brennerlängsachse einen Winkel von etwa 30 bis 60 °.

Das Verhältnis des Durchmessers des Querschnitts der Brennervorkammer in der Ebene der Brennermündung zu dem Durchmesser der Öffnung der Kammer liegt zwischen etwa 3 : 1 bis 1,5 : 1.

Der axial geführte Strom eines homogenen oder heterogenen Reaktanden oder Reaktandengemisches kann z. B. ein entsprechend aufgeheiztes Schweröl, ein vorgeheizter feststoffhaltiger förder- und pumpbarer Rückstand oder auch ein Strom gemahlener Kohlenteilchen sein, der benachbarte koaxiale und an der Brennermündung als Ringstrom austretende Strom ist vorteilhaft ein Strom eines Moderatorgases oder eines Trenngases. Als Trenngas kann rezirkuliertes Prozeßgas, z. B. Strippgas aus den Gaswäschen eingesetzt werden. Hierbei werden angereicherte schädliche Bestandteile des Gases beim Betrieb des Brenners in der Reaktionszone des Brenners durch Umsetzung mit dem Verbrennungsgas, z. B. Luft in einfachere Bestandteile zerlegt. Daneben fallen als Hauptbestandteile Wasserstoff, Kohlenmonoxid und Stickstoff an. Gegebenenfalls im Strippgas enthaltenes Kohlendioxid moderiert die Vergasungsreaktion und wird teilweise zu Kohlenmonoxid umgesetzt. Desweiteren können Entspannungsgase z. B. aus einem Raffineriebereich als Trenngas in dem dem axialen Strom benachbarten Ringstrom eingesetzt werden. Auch können Entspannungsgase aus Druckprozessen wie Methanol- oder Ammoniaksynthese oder hydrierenden Konversionsprozessen mit Vorteil hier eingesetzt werden.

In dem weiteren, den axialen Zentralstrom und den diesem benachbarten koaxialen Strom umgebenden koaxialen Strom wird der notwendige Sauerstoff in Form eines freien Sauerstoff enthaltenden Gases als äußerer Ringstrom koaxial zugeführt, wobei der Austritt an der Brennermündung über parallel zur Innenwand der konischen Brennervorkammer angelegte Austrittsbohrungen oder über einen in Richtung der Brennerlängsachse geneigten Ringspalt parallel zur Innenwand der Brennerkühlkammer erfolgt.

Durch die Trennung zwischen Brennstoffzufuhr über die axiale Leitung und die Zufuhr des freien Sauerstoff enthaltenden Gases über die äußere koaxiale Leitung mittels des über die innere koaxialen Leitung zugeführte Trenn- oder Moderatorgases wird insbesondere bei aschehaltigen Rückstandssuspensionen die Gefahr des Zuschlackens der Brennermündung bei Rückverwirbelung verringert. Auch die Gefahr einer Hochtemperaturkorrosion an der Brennermündung ist durch den vorgegebenen Strom des Separator- oder Moderatorgases, der zusätzlich noch eine Kühlfunktion übernehmen kann und die hierdurch bewirkte Separierung von Brennstoff- und Sauerstoffzufuhr zusätzlich verringert.

In weiterer vorteilhafter Ausgestaltung des vorliegenden Brenners wird dem in dem Zentralrohr axial geführten Strom des Brennstoffes über das Mantelrohr Dampf oder ein anderes Moderatorgas injektorartig zugemischt. Hierbei wird der Feststoff von dem Dampf- oder dem Moderatorgas beschleunigt und zerstäubt. Durch den außen mantelförmig um den Brennstoff herum zugeführten Dampfstrom verringert sich der Verschleiß in der axialen Zerstäuberdüse trotz hoher Austrittsgeschwindigkeit.

Der über die äußere koaxiale Leitung zugeführte freie Sauerstoff kann mit oder ohne Drall eintreten. Durch die ringförmige Anordnung hält der Sauerstoff den zerstäubten Rückstand von der Innenwand der gekühlten Kammer ab.

Durch den über Kühlwasserzuleitung und Kühlwasserableitung in der Brennerkühlkammer geführten Wasserstrom wird die Temperatur an der Außenwand der Brennerkühlung ausreichend erniedrigt, wobei die Brennerkühlkammer in einem abstromseitigen Abstand von der Brennermündung stetig auf einen weiteren ringförmigen Querschnitt übergeht. Die Querschnittserweiterung schützt die Brennermündung vor der Strahlung der Reaktionszone.

Durch die Abschirmung der Wärmestrahlung mittels der wassergekühlten Brennerkühlkammer bleibt die Temperatur ausreichend niedrig, um im Zusammenwirken mit einer ausreichenden Geschwindigkeit der Reaktanden eine Zündung des Gemisches bereits in der Brennerkühlkammer sicher zu vermeiden.

Eine Ausführung des erfindungsgemäßen Brenners in einem Längsschnitt ist in der Fig. gezeigt.

Die angegebenen Bezugszeichen haben folgende Bedeutung:

1 Reaktor
2 Brennerkühlkammer
3 äußere Ringleitung
4 Ringspalt bzw. Austrittsbohrung für äußere Ringleitung

5 innere Ringleitung
6, 6' Kühlwasserzufluß-, -abflußleitung
7 Mantelleitung für Zentralrohr
8 Zentralrohr
9 Austrittsdüse
10 Brennervorkammer

Die aus äußerer Ringleitung 3 mit den Austrittsbohrungen bzw. dem Ringspalt 4, innerer Ringleitung 5 sowie Mantelleitung 7 mit Zentralrohr 8 zusammengesetzte Baueinheit der Brennerlanze ist aus einem System koaxialer entsprechend geformter Rohrelemente, die entsprechend dem technischen Stand durch Abstandshalter und Schweißverbindung eine kompakte und formstabile Baueinheit bilden, aufgebaut. Zentralrohr 8 endet in einem aufstromseitigen Abstand von der Brennermündung. Die Zentralrohr 8 umgebende Mantelleitung 7 geht am abstromseitigen Ende des Zentralrohres im Inneren des Brenners auf einen engeren, etwa den Querschnitt des Zentralrohres 8 verringerten Querschnitt über und verjüngt sich ggf. weiter auf den Austrittsquerschnitt der Austrittsdüse 9.

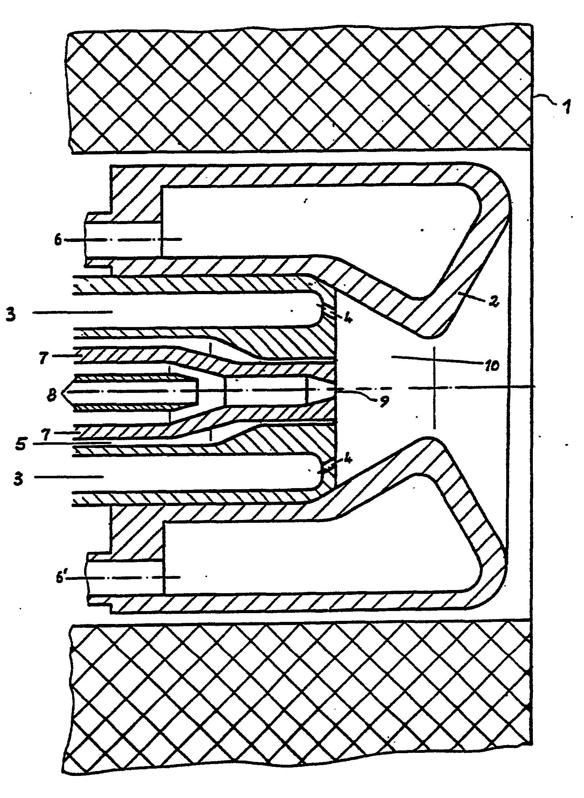

## Patentansprüche

1. Verfahren zum Betreiben eines Brenners mit einer zentralen Zuleitung für homogene oder heterogene Reaktanden sowie mit zwei diese koaxial umgebenden Ringleitungen, die an der Brennermündung einander umgebende Auslässe besitzen und im Bereich des Brennerkopfes peripher angeordneter Brennerkühlkammer, wobei der Brenner aus der mit Kühlmittelzufluß- und -abflußleitungen versehenen Brennerkühlkammer und einer in eine entsprechende Aussparung der Brennerkühlkammer einsetzbaren Brennerlanze, die die Zuführung der Reaktanden bis zur Brennermündung aufnimmt, zusammengesetzt ist und wobei sich die über die Brennermündung in Abstromrichtung hinausgezogene Brennerkühlkammer, ausgehend von der Abstromseite der Brennermündung konisch auf einen kleineren Querschnitt verengt, so daß eine kegelstumpfförmige abstromseitig offene Brennervorkammer ausgebildet ist, dadurch gekennzeichnet, daß kohlenstoffhaltige Reaktanden durch die zentrale Zuführung, sauerstoffhaltiges Gas durch die äußere Ringleitung und Moderatorgas durch die innere Ringleitung geführt werden.

2. Verfahren nach Anspruch 1, gekennzeichnet durch einen an der Brennermündung mit kreisförmigem Querschnitt in die Brennervorkammer austretenden axial geführten Strom eines homogenen oder heterogenen Reaktanden oder Reaktandengemisches, einen Strom eines koaxial geführten und an der Brennermündung auf einem größeren mittleren Durchmesser als dem Durchmesser des axial geführten Stromes als Ringstrom in die Brennervorkammer austretenden Reaktanden oder Moderators, insbesondere eines Moderatorgases, und einen weiteren Strom eines koaxial geführten und an der Brennermündung auf einem größeren mittleren Durchmesser als dem mittleren Durchmesser des erstgenannten koaxial geführten Ringstromes in die Brennervorkammer austretenden weiteren Reaktanden.

3. Verfahren nach Anspruch 1 oder 2, dadurch gekennzeichnet, daß der als äußerer Ringstrom koaxial geführte Reaktand durch entsprechend verteilte in Richtung der Brennerlängsachse geneigte Austrittsbohrungen parallel zur Innenwand der konischen Brennerkühlkammer aus der Brennermündung in die Brennervorkammer austritt.

4. Verfahren nach einem der Ansprüche 1 oder 2, dadurch gekennzeichnet, daß der als äußerer Ringstrom koaxial geführte Reaktand durch einen in Richtung der Brennerlängsachse geneigten Ringspalt parallel zur Innenwand der konischen Brennerkühlkammer aus der Brennermündung in die Brennervorkammer austritt.

## Claims

1. A method of operating a burner having a central feed pipe for homogeneous or heterogeneous reactants, two annular pipes which enclose the feed pipe coaxially and have outlets enclosing one another at the burner mouth, and a burner cooling chamber disposed peripherally in the zone of the burner head, the burner being composed of the burner cooling chamber, having coolant supply and discharge lines, and a burner lance which can be inserted in a matching recess in the burner cooling chamber and receives the supply of reactants as far as the burner mouth, the burner cooling chamber, extended beyond the burner mouth in the downstream direction, tapering starting from the downstream side of the burner mouth conically to a smaller cross-section, so as to form a frustoconical burner prechamber open on the downstream side, characterized in that carbonaceous reactants are carried through the central supply pipe, oxygen-containing gas is carried through the outer annular pipe, and moderator gas is carried through the inner annular pipe.

2. A method according to claim 1, characterized by an axially carried flow of a homogeneous or heterogeneous reactant or mixture of reactants which emerges with a circular cross-section into the burner prechamber at the burner mouth, a stream of a coaxially carried reactant or moderator, more particularly a moderator gas, which emerges into the burner prechamber as an annular flow of larger average diameter than the diameter of the axially carried flow, and a further flow of a coaxially carried further reactant which emerges into the burner prechamber at the burner mouth with a larger average diameter than the average diameter of the first-mentioned coaxially carried annular flow.

3. A method according to claims 1 or 2, characterized in that the coaxially carried reactant emerges as the outer annular flow from the burner mouth into the burner prechamber via correspondingly distributed outlet bores inclined in the direction of the burner longitudinal axis and parallel with the inner wall of the conical burner cooling chamber.

4. A method according to one of claims 1 or 2, characterized in that the coaxially carried reactant emerges as the outer annular flow from the burner mouth into the burner prechamber via an annular gap inclined in the direction of the burner longitudinal axis and parallel with the inner wall of the conical burner cooling chamber.

## Revendications

1°) Procédé pour le fonctionnement d'un brûleur avec une conduite centrale d'arrivée pour des produits de réaction homogènes ou hétérogènes, ainsi qu'avec deux conduites annulaires coaxiales entourant cette conduite centrale et possédant à l'embouchure du brûleur des sorties s'entourant l'une et l'autre, et avec une chambre de refroidissement du brûleur disposée de façon périphérique dans la région de la tête du brûleur, grâce à quoi le brûleur est constitué de la chambre de refroidissement du brûleur muni des conduites d'arrivée et de retour de moyens de refroidissement et d'une lance de brûleur pouvant être logée dans un évidement correspondant de la chambre de refroidissement du brûleur, cette lance du brûleur recevant l'introduction des produits de réaction jusqu'à l'embouchure du brûleur, et dans lequel la chambre de refroidissement du brûleur, qui s'étend vers l'extérieur en direction aval au-delà de l'embouchure du brûleur, se rétrécit de façon conique en une plus petite section transversale à partir du côté aval de l'embouchure du brûleur, ce qui forme ainsi une chambre de précombustion ouverte du côté aval et de forme conique, caractérisé en ce que les produits de réaction contenant du carbone sont introduits par la conduite centrale, le gaz contenant de l'oxygène est introduit par la conduite annulaire extérieure, et le gaz modérateur est introduit par la conduite annulaire intérieure.

2°) Procédé selon la revendication 1, caractérisé par un premier flux d'un produit de réaction homogène ou hétérogène, ou d'un mélange de produits de réaction, ce flux sortant de l'embouchure du brûleur avec une section transversale de forme circulaire et étant guidé de façon axiale vers la chambre de pré-combustion, par un deuxième flux en forme de flux annulaire guidé de façon coaxiale, présentant à l'embouchure du brûleur un diamètre moyen supérieur au diamètre du premier flux guidé de façon axiale, ce deuxième flux sortant de l'embouchure du brûleur et entrant dans la chambre de pré-combustion étant un flux de produits de réaction ou un modérateur, en particulier un flux de gaz modérateur, et par un troisième flux en forme de flux annulaire guidé de façon coaxiale, présentant à l'embouchure du brûleur un diamètre moyen supérieur au diamètre moyen du flux annulaire guidé de façon coaxiale et cité précédemment, ce troisième flux étant un flux d'autres produits de réaction sortant de la chambre de pré-combustion.

3°) Procédé selon les revendications 1 ou 2, caractérisé en ce que les produits de réaction guidés de façon coaxiale sous forme de flux annulaire extérieur sortent par des alésages de sortie répartis de façon convenable en direction de l'axe longitudinal du brûleur et inclinés parallèlement à la paroi intérieure de la chambre conique de refroidissement du brûleur, ce flux sortant de l'embouchure du brûleur dans la chambre de pré-combustion du brûleur.

4°) Procédé selon l'une quelconque des revendications 1 ou 2, caractérisé en ce que les produits de réaction, guidés de façon coaxiale sous forme de flux annulaire extérieur, sortent par une fente annulaire en direction de l'axe longitudinal du brûleur et inclinée parallèlement à la paroi intérieure de la chambre conique de refroidissement du brûleur, ce flux sortant de l'embouchure du brûleur dans la chambre de pré-combustion.